# EUROPÄISCHE PATENTSCHRIFT

(11) **EP 3 559 760 B1**
(45) Veröffentlichungstag und Bekanntmachung des Hinweises auf die Patenterteilung: **04.12.2024**
(21) Anmeldenummer: 17829146.4
(22) Anmeldetag: 08.12.2017
(51) Int. Cl.: G05B 15/02, F24C 7/08, H02J 3/14, H05B 1/02

(54) **VERFAHREN ZUM BETREIBEN VON MEHREREN GERÄTEN MIT ELEKTRISCHEN VERBRAUCHERN UND SYSTEM MIT MEHREREN SOLCHEN GERÄTEN**
METHOD FOR OPERATING A PLURALITY OF DEVICES HAVING ELECTRICAL CONSUMERS, AND SYSTEM HAVING A PLURALITY OF SUCH DEVICES
PROCÉDÉ DE FONCTIONNEMENT D'UNE PLURALITÉ D'APPAREILS POURVUS DE CONSOMMATEURS ÉLECTRIQUES ET SYSTÈME POURVU D'UNE PLURALITÉ DE TELS APPAREILS

(30) Priorität: 23.12.2016 DE 102016125572
(43) Veröffentlichungstag der Anmeldung: 30.10.2019
(73) Patentinhaber: RATIONAL Aktiengesellschaft, 86899 Landsberg am Lech (DE); RATIONAL International AG, 9435 Heerbrugg (CH)
(72) Erfinder: BREUNIG, Manfred, 86956 Schongau (DE); LÖW, Florian, 68700 Cernay (FR); MAREK, Frank, 86836 Klosterlechfeld (DE)
(74) Vertreter: Prinz & Partner mbB
(86) Internationale Anmeldenummer: PCT/EP2017/082053
(87) Internationale Veröffentlichungsnummer: WO 2018/114403

(56) Entgegenhaltungen:
- EP-A1- 2 061 131
- EP-A1- 2 868 979
- WO-A2-2009/103258
- US-A1- 2014 158 679

## Beschreibung

Die Erfindung betrifft ein Verfahren zum Betreiben von mehreren Geräten mit elektrischen Verbrauchern oder und System mit mehreren solchen Geräten.

Bei gewerblichen Kunden von Energieversorgungsunternehmen wird Strom meist in solchen Mengen verbraucht, dass die Abrechnung des Energieversorgers mittels RLM-Verfahren erfolgt. Bei Betrieben mit mehr als 100 MWh ist dies Standard. Dabei wird die verbrauchte Menge an Energie (in kWh) pro 15 min.-Zeitintervall gemessen und dividiert und der daraus folgende kW-Wert als Basis für den Leistungspreis verwendet (der gesamte Strompreis setzt sich aus Arbeitspreis und Leistungspreis zusammen). Der ermittelte Spitzenwert wird als Basis für den gesamten Monat verwendet. Wird nur einmalig ein hoher kW-Wert benötigt, so erhöhen sich die Kosten insgesamt. Um dies zu verhindern, sind sogenannte Lastabwurfschaltungen bekannt. Diese werden zur Begrenzung der max. Stromaufnahme genutzt.

Nachteilig ist, dass die Begrenzung ggf. negative Auswirkung auf die Prozesse haben kann, für die die Geräte eingesetzt werden. Handelt es sich beispielsweise um Gargeräte, muss verhindert werden, dass ein laufender Garprozess zu einem ungünstigen Zeitpunkt unterbrochen oder abgebrochen wird.

In der DE 199 02 997 A1 ist ein Verfahren beschrieben, mit dem eine Lastabwurfschaltung umgangen werden kann, indem ein Gerät, das zu bestimmten Zeiten nicht abgeschaltet werden soll, für diese Zeiten getrennt von der Lastabwurfschaltung mit Energie versorgt wird. Hierdurch ergibt sich jedoch ein hoher Aufwand beim Anschließen der Geräte.

Die EP 2 868 979 A1 offenbart ein Gargerät mit mindestens zwei Heizvorrichtungen und mit einer Steuerung, mit welcher die Heizvorrichtungen mehrerer Gargeräte gesteuert werden können. Zudem ist ein Anschlusswertspeicher vorgesehen, in dem ein zulässiger Anschlussleistungswert des Gargeräts hinterlegt werden kann. Des Weiteren ist ein Garprozess Speicher vorhanden, in dem abzuarbeitende Garprozesse hinterlegt sind. Die Steuerung regelt die Leistungsaufnahme der Heizvorrichtungen im Hinblick auf anstehende Garprozesse und die zulässige Anschlussleistung des Gargeräts, und zwar derart, dass die Anschlussleistung zu keinem Zeitpunkt den hinterlegten Anschlussleistungswert überschreitet.

Die EP 2 061 131 A1 beschreibt ein Verfahren und eine Vorrichtung zur Steuerung der Verteilung von elektrischer Energie für eine Mehrzahl von elektrischen Heizeinrichtungen einer Küche mit einer Apparatesteuerung. Dabei soll die elektrische Energie derart verteilt werden, dass die Gesamtleistungsaufnahme nicht größer ist als ein definierter Maximalwert bzw. ein Prozentsatz eines Anschlusswertes.

Die Aufgabe der Erfindung besteht darin, mehrere Geräte innerhalb einer vorgegebenen Grenze der maximalen Leistungsaufnahme zu betreiben, ohne dass eine Lastabwurfschaltung nötig ist und ohne dass sich das Erreichen der maximalen Leistungsaufnahme negativ auf den Betrieb der Geräte auswirkt.

Zur Lösung dieser Aufgabe sind bei einem Verfahren zum Betreiben von mehreren Gargeräten, die jeweils mindestens einen elektrischen Verbraucher enthalten, die folgenden Schritten vorgesehen: das Gerät fragt, bevor es den Verbraucher einschaltet, bei einem Allokationsmodul an, ob der Verbraucher des Geräts in Betrieb genommen werden kann. Das Allokationsmodul entscheidet auf der Basis von Parametern des angefragten Prozesses, von Parametern von aktuell laufenden und/oder geplanten Prozessen der anderen Verbraucher und eines vorgegebenen maximalen Leistungswerts, ob der angefragte Prozess freigegeben, modifiziert oder zumindest vorläufig gesperrt wird. Zwischen der Steuerung der Geräte und dem Allokationsmodul ist eine Kommunikationsverbindung vorhanden, wobei die Geräte untereinander vernetzt sind, sodass anhand von verschiedenen, für den jeweiligen Anwendungszweck geeigneten Parametern abgestimmt wird, welcher Prozess Vorrang gegenüber anderen Prozessen hat beziehungsweise umgekehrt, welcher Prozess modifiziert oder zurückgestellt wird. Das Allokationsmodul greift bei der Entscheidung auf eine Datenbank zu, in der Leistungsdaten und Leistungsprofile für unterschiedliche Prozesse hinterlegt sind, wobei es sich bei den Leistungsdaten um den typischen Energieverbrauch der Verbraucher über den Tagesablauf handelt. Zur Lösung dieser Aufgabe ist auch ein System vorgesehen mit mehreren Geräten, die jeweils mindestens einen elektrischen Verbraucher sowie eine Steuerung aufweisen, und mit einem Allokationsmodul, in dem ein maximaler Leistungswert für die Verbraucher hinterlegt ist, wobei eine Kommunikationsverbindung zwischen der Steuerung der Geräte und dem Allokationsmodul vorhanden ist, über die die Steuerungen Informationen über geplante und aktuelle Prozesse an das Allokationsmodul senden vom Allokationsmodul und ein Freigabesignal zur Inbetriebnahme des Verbrauchers empfangen können. Die Geräte sind untereinander vernetzt, sodass anhand von verschiedenen, für den jeweiligen Anwendungszweck geeigneten Parametern abstimmbar ist, welcher Prozess Vorrang gegenüber anderen Prozessen hat beziehungsweise umgekehrt, welcher Prozess modifiziert oder zurückgestellt wird. Das System hat eine Datenbank, in der Leistungsdaten und Leistungsprofile für unterschiedliche Prozesse hinterlegt sind, wobei es sich bei den Leistungsdaten um den typischen Energieverbrauch der Verbraucher über den Tagesablauf handelt, und wobei das Allokationsmodul eingerichtet ist, bei der Entscheidung über ein Freigabesignal auf die Datenbank zuzugreifen.

Die Erfindung beruht auf dem Grundgedanken, dass die Geräte untereinander eine intelligente Abstimmung treffen, wann welcher Verbraucher (also elektrischer Verbraucher) mit welcher Leistung betrieben wird, um einen vorgegebenen maximalen Leistungswert nicht zu überschreiten.

Bei den Parametern der aktuell laufenden und/oder geplanten Prozesse kann es sich um mindestens einen der folgenden Parameter handeln: Rest-Garzeit, Leistungsbedarf beim Garen, Leistungsbedarf beim Auf- oder Vorheizen. Grundsätzlich kann es sich um jeden Parameter handeln, der hilfreich für die Entscheidung ist, ob aktuell ein neuer Prozess gestartet werden kann oder ob mindestens in mindestens einem der aktuell laufendenden Prozesse die Leistungsaufnahme so verringert werden kann, dass im Hinblick auf den vorgegebenen maximalen Leistungswert ein neuer Prozess gestartet werden kann.

Das Allokationsmodul kann physisch vorhanden sein als Steuerungsmodul. Es ist auch möglich, das Allokationsmodul rein als Software zu implementieren, die nicht Bestandteil eines der Gerät sein muss.

Beispielsweise kann, wenn es sich bei den Verbrauchern um solche handelt, die in einer Gaststätte oder einem Restaurant vorhanden sind, sich aus den Leistungsdaten ergeben, dass üblicherweise um die Mittagszeit sämtliche Fritteusen in Betrieb sind. Es kann sich aus den Leistungsdaten auch ergeben, dass üblicherweise kurz nach der Mittagszeit die Spülmaschine eingeschaltet wird. Bei einer Bäckerei kann hinterlegt sein, dass frühmorgens sämtliche Backöfen vorgeheizt werden. In den Leistungsprofilen ist hinterlegt, welche elektrische Leistung während eines konkreten Prozesses abgerufen wird. Für den Garprozess "Schweinebraten" kann beispielsweise hinterlegt sein, dass über den Großteil des Garprozesses eine vergleichsweise geringe Leistung erforderlich ist, während kurz vor Ende des Garprozesses eine große Heizleistung erforderlich ist, um die gewünschte Kruste zu erzeugen.

Auf der Basis der Leistungsdaten und Leistungsprofile kann das Allokationsmodul dann verschiedene intelligente Entscheidungen treffen. Beispielsweise können, wenn mehrere Backöfen vorgeheizt werden müssen, einige der Backöfen früher eingeschaltet werden, sodass sie vor anderen Backöfen aufheizen und anschließend lediglich eine bestimmte Temperatur halten müssen. Das Allokationsmodul kann auch einen neuen Prozess sperren, wenn zwar aktuell der vorgegebene maximale Leistungswert mit dem neuen Prozess nicht überschritten würde, aber klar erkennbar ist, dass aufgrund von zwei oder mehr parallel laufenden und sich zumindest teilweise überschneidenden Prozessen der maximale Leistungswert zwangsläufig später überschritten würde, beispielsweise weil die Prozesse gegen Ende hin eine hohen Leistungsaufnahme beinhalten.

Eine modifizierte Freigabe kann darin bestehen, den angefragten Prozess mit verringerter Leistung zu starten oder auszuführen. Dies betrifft insbesondere solche Prozesse, bei denen es für das spätere Ergebnis ohne negative Auswirkung ist, wenn nur eine verringerte Leistung freigegeben wird. Dies betrifft beispielsweise das Vorheizen eines Backofens; der Backofen kann mit verringerter Leistung vorgeheizt werden, was lediglich dazu führt, dass das Vorheizen insgesamt etwas länger dauert. Eine modifizierte Freigabe kann auch darin bestehen, den angefragten Prozess erst dann zu starten, wenn sich die Leistungsaufnahme mindestens eines anderen Prozesses verringert hat. In diesem Fall wartet der entsprechende Verbraucher, bis er ein entsprechendes Signal empfängt. Beispielsweise kann das Vorheizen eines Backofens erst dann freigegeben werden, wenn ein aktuell laufender Aufheizprozess der Spülmaschine abgeschlossen ist.

Es ist auch möglich, dass das Allokationsmodul auf aktuell laufende Prozesse dahingehend einwirkt, dass diesen eine verringerte Leistungsaufnahme zugeteilt wird. Beispielsweise kann in das aktuell laufende Aufheizen eines Backofens dahingehend eingegriffen werden, dass die freigegebene Leistung verringert wird. Dies ermöglich es, einen angefragten Prozess unmittelbar zu starten und nicht erst dann, wenn der Backofen vollständig aufgeheizt ist.

Gemäß einer Ausgestaltung der Erfindung ist vorgesehen, dass als modifizierte Freigabe ein Prozess zumindest teilweise vorgezogen wird. Dies kann insbesondere unter Berücksichtigung der hinterlegten Leistungsdaten und Leistungsprofile geschehen, wenn das Allokationsmodul erkennt, dass bestimmte Prozesse vorverlegt werden sollten, nämlich in Phasen mit geringer Leistungsaufnahme anderer Prozesse, damit später ein "Engpass" vermieden wird.

Gemäß einer bevorzugten Ausführungsform der Erfindung treffen die Geräte nach vorgegebenen Regeln eine Entscheidung, wer das Allokationsmodul implementiert. Anders ausgedrückt: das Allokationsmodul ist als dynamischer Master implementiert. Zu diesem Zweck sind vorzugsweise die Steuerungen der Verbraucher so eingerichtet, dass die Funktion des Allokationsmoduls von mehreren oder sogar allen der Steuerungen der Verbraucher übernommen werden kann. Dies hat den Vorteil, dass kein zusätzliches, "zentrales" Allokationsmodul notwendig ist. Außerdem ergibt sich eine Redundanz dahingehend, dass das Allokationsmodul flexibel in jeweils einer geeigneten Steuerung der verschiedenen Steuerungen implementiert werden kann.

Beispielsweise übernimmt die Funktion des Allokationsmoduls die Steuerung eines anderen Verbrauchers, wenn derjenige Verbraucher abgeschaltet wird, dessen Steuerung aktuell das Allokationsmodul implementiert. Eine der vorgegebenen Regeln, nach denen die Entscheidung getroffen wird, welche Steuerung aktuell das Allokationsmodul implementiert, kann beispielsweise die zur Verfügung stehende Rechenleistung sein. Eine andere Regel kann sein, welcher Verbraucher voraussichtlich über einen vorbestimmten Zeitraum nicht abgeschaltet wird.

Dabei kann vorgesehen sein, dass initial festgelegt ist, welches elektrische Gerät das Allokationsmodul implementiert, und dass das Allokationsmodul neu "vergeben" wird, wenn dies aufgrund geänderter Rahmenbedingungen zweckmäßig erscheint.

Alternativ zur Variante, dass das Allokationsmodul in den Steuerungen implementiert wird, kann auch vorgesehen sein, dass jedes der Geräte mit einem von der Steuerung getrennten Allokationssteuermodul versehen ist, das bei Bedarf aktiviert wird und ansonsten "schläft".

Das Allokationsmodul kann auch eine Serveranwendung sein, beispielsweise eine Cloud-basierte Serveranwendung. In diesem Fall kann mit geringem Aufwand eine vergleichsweise hohe Rechenleistung zur Verfügung gestellt werden. Es ist auch mit geringem Aufwand möglich, die vom Allokationsmodul verwendeten Algorithmen mit vergleichsweise geringem Aufwand zu aktualisieren.

Gemäß einem Aspekt der Erfindung kann das Allokationsmodul sich über den vorgegebenen maximalen Leistungswert hinwegsetzen, wenn dies in einer bestimmten Situation unabdingbar erscheint. Diese Entscheidung kann das Ergebnis einer Abwägung sein zwischen den sich ergebenden höheren Kosten für die Energieversorgung einerseits und andererseits den sich für einen bestimmten Arbeitsablauf ergebenden Konsequenzen, falls der vorgegebene maximale Leistungswert respektiert wird.

Falls das Allokationsmodul sich über den vorgegebenen maximalen Leistungswert hinwegsetzt, ist denkbar, dass der sich dann ergebende Spitzenwert der elektrischen Leistung gespeichert und im weiteren Ablauf für den aktuellen Abrechnungszeitraum als neuer maximaler Leistungswert verwendet wird, da es für die weiteren Kosten im entsprechenden Monat ohne Bedeutung ist, wenn einer höherer maximaler Leistungswert angesetzt wird.

Das Allokationsmodul kann mindestens eine der folgenden Zuteilungsstrategien anwenden: "First in - first out", "Vorrang für kurze, leistungsintensive Prozesse", "Priorisierung nach nächstliegendem Abschlusszeitpunkt", "Komplexe Priorisierung".

Bei der Zuteilungsstrategie "First in - first out" sind keine komplizierten Entscheidungsstrategien seitens des Allokationsmoduls erforderlich; die verschiedenen Prozesse werden einfach in der Reihenfolge abgearbeitet, in der sie beim Allokationsmodul angemeldet werden. Die einzige Interaktion des Allokationsmoduls besteht darin, den nächsten Prozess erst dann freizugeben, wenn eine ausreichende "Leistungsreserve" zum vorgegebenen maximalen Leistungswert gegeben ist. Beim Beispiel eines Garprozesses werden alle Garprozesse in der Reihenfolge ihres Starts mit höchster Priorität abgearbeitet. Eine Neuzuteilung findet erst statt, wenn der zuerst gestartete Prozess einen reduzierten Leistungsbedarf hat oder beendet ist.

Bei der Zuteilungsstrategie "Vorrang für kurze, leistungsintensive Prozesse" ergibt sich der Vorteil, dass länger andauernde Prozesse nicht dazu führen, dass andere, sehr kurze Prozesse über einen langen Zeitraum blockiert werden. Stattdessen kann meist davon ausgegangen werden, dass es im Hinblick auf ein gewünschtes Ergebnis nicht so gravierend ist, wenn länger andauernde Prozesse für eine kurze Zeitdauer unterbrochen oder aufgeschoben werden, damit sehr kurze, leistungsintensive Prozesse abgearbeitet werden können.

Die Zuteilungsstrategie "Priorisierung nach nächstliegendem Abschlusszeitpunkt" arbeitet ergebnisorientiert dahingehen, dass diejenigen Prozesse Vorrang haben, die aus bestimmten (unter Umständen übergeordneten) Gründen als nächstes abgeschlossen werden müssen, beispielsweise weil andere Prozesse auf ihnen aufbauen und ansonsten der gesamte Produktionsprozess nachteilig beeinflusst wird.

Mit der Zuteilungsstrategie "komplexe Priorisierung" können schließlich alle Fälle abgedeckt werden, bei denen flexibel auf bestimmte Ergebnisse reagiert werden muss. Dies kann beispielsweise dadurch abgebildet werden, dass Prozesse mit einer Kennzahl versehen werden, die ihre Priorität wiederspiegelt. Diese Kennzahl kann beispielsweise berücksichtigen, wie gravierend sich eine Zeitverzögerung oder eine modifizierte Freigabe auf das Ergebnis des Prozesses auswirkt oder auf andere Prozesse, die auf den jeweiligen Prozess aufbauen. Die Kennzahl kann sich auch dynamisch ändern, beispielsweise weil in der Zwischenzeit andere Ereignisse stattgefunden haben, aufgrund deren die Dringlichkeit gestiegen ist, dass ein bestimmter Prozess abgearbeitet wird. Beispielsweise kann das Starten eines Spülvorgangs einer Spülmaschine zunächst eine sehr niedrige Priorität haben, aber sich mit der Zeit erhöhen, wenn aufgrund der Leistungsanforderung anderer Geräte die Spülmaschine über einen langen Zeitraum keine Freigabe bekommen hat und dementsprechend irgendwann das saubere Geschirr auszugehen droht.

Alternativ zu Kennzahlen können die verschiedenen Prozesse auch einer bestimmten Kategorie von Priorität zugeordnet werden, beispielsweise einer Gruppe A mit höchster Priorität, einer Gruppe B mit etwas geringeren Priorität, einer Gruppe C mit geringer Priorität und einer Gruppe D mit niedrigster Priorität. Diese Vorgehensweise erleichtert die Verwaltung der anstehenden Prozesse, da es keine unendlich feine Abstufung (in der Form der Kennzahlen) gibt.

Wenn es innerhalb derselben Kategorie von Priorität so viele anstehende Garprozesse gibt, dass damit die Leistungsgrenzen überschritten würden, muss er ergänzenden Kriterium für die Priorisierung herangezogen werden, beispielsweise die nächste Ziel-Fertigstellungzeit.

Beim Beispiel eines Garprozesses kann bei der Zuteilungsstrategie "komplexe Priorisierung" das übergeordnete Ziel verfolgt werden, dass die Leistung so verteilt wird, dass es keine Einbußen bei der Garqualität gibt. Der von den Gargeräten angeforderte Heizbedarf wird daher intelligent so zugeteilt, dass insgesamt der beste Erfolg gewährleistet ist.

Bei der Zuteilungsstrategie "komplexe Priorisierung" können, wenn ein beteiligtes Gerät ein Gargerät ist, die folgenden Prioritätsgesichtspunkte relevant sein: Abweichung von der vom Benutzer erwarteten Garzeit, Auswirkung auf den Garzustand, Notwendigkeit einer Benutzerinteraktion. Grundsätzlich wird bevorzugt, dass die Abweichung von der vom Benutzer erwarteten Garzeit möglichst gering ist, damit der Benutzer möglichst wenig irritiert wird und auch der von ihm geplante Arbeitsablauf so wenig wie möglich beeinträchtigt wird. Beim Aspekt der Auswirkung auf den Garzustand wird berücksichtigt, ob eine Verzögerung oder eine Modifikation eines Prozesses Auswirkungen auf den Garzustand hat oder nicht. Falls Auswirkungen zu befürchten sind, hat der entsprechende Prozess eine hohe Priorität, sodass er unverändert durchgeführt wird. Beispielsweise ist beim Anbraten eine gewisse Mindesttemperatur erforderlich, sodass es keine Option ist, den Leistungsbedarf für diesen Prozess zu begrenzen. Bei Prozessen, bei denen eine Benutzerinteraktion notwendig ist, beispielsweise das Wenden von Pfannkuchen oder Steaks, ergibt sich eine hohe Priorität, damit der Benutzer nicht warten muss. Solche Prozesse werden höher priorisiert als andere, die im Hintergrund (und damit außerhalb des Fokus des Benutzers) ablaufen können.

Bei den Geräten kann es sich grundsätzlich um alle Typen mit elektrischen Verbrauchern handeln, die energieintensiv sind und damit eine hohe Anschlussleistung haben. Es kann sich insbesondere um Gargeräte, insbesondere Kombidämpfer oder Tiegel-Gargeräte handeln, und um Fritteusen handeln.

Es ist auch möglich, die Geräte zu gruppieren, so dass unterschiedliche Arten von Geräten gegenüber anderen Gerätearten eine höhere oder niedrigere Priorität haben. So können beispielsweise Waschmaschinen eine niedrigere Priorisierung haben als Spülmaschinen, da es für den Produktionsablauf üblicherweise weniger kritisch ist, wenn eine Waschmaschinenladung später fertig wird, als dass sauberes Geschirr zur Verfügung steht, um Speisen servieren zu können.

Gemäß einer Ausführungsform der Erfindung ist eine Anzeigeeinheit vorgesehen, mit der einem Benutzer Informationen über eine verfügbare Leistung und/oder Vorschläge für einen geänderten Ablauf von Prozessen angezeigt werden können. Es können dem Benutzer auch Restprozesszeiten angezeigt werden sowie die Auswirkungen des Starts eines zusätzlichen Prozesses auf bereits laufende Prozesse, sodass der Benutzer sich entweder darauf einstellen kann, dass ein laufender Prozess später abgeschlossen wird, oder der Benutzer einen bereits laufenden Prozess manuell höher priorisieren kann, damit er zu einem gewünschten Zeitpunkt abgeschlossen ist.

Es ist auch möglich, dass die vernetzten Geräte automatisch Vorschläge für eine veränderte Ablaufplanung erstellen, um möglichst niedrige Spitzenstromwerte zu ermöglichen. Auch kann der Betreiber der Geräte durch die Vorgabe neuer Werte automatisch geänderte Abläufe erhalten. So kann ein Gerät, beispielsweise ein thermischen Gargerät, einen späteren Einschaltzeitpunkt vorschlagen, wenn ein anderes Gerät, beispielsweise die Spülmaschine, gerade hochheizt, oder umgekehrt.

Soweit es sich bei den Geräten um Gargeräte handelt, sollten an die Priorisierung die folgenden Anforderungen gestellt werden:
- Fairness: Kein Garprozess sollte unverhältnismäßig verlängert werden, während ein anderer bevorzugt wird und damit ohne Zeiteinbußen ablaufen kann.
- Balance: Einem Garprozess sollte nie unverhältnismäßig wenig Heizleistung zur Verfügung stehen.
- Regeln einhalten: Die Prioritätszahl wird nach festen Regeln von allen Gargeräten berechnet. Die Zuteilung von Heizbedarf erfolgt im Konfliktfall, also wenn ansonsten die maximale Leistung überschritten würde, nach Reihenfolge der Prioritätenliste oder wird anteilig entsprechend gewichteten Prioritätszahlen zugeteilt.

Die Grundlage für die Berechnung der Prioritätszahl kann je nach Rezeptschritt variabel sein, beispielsweise mit und ohne Gargut, mit und ohne Vorheizen, Standby, Garen (mit Unterschritten "Anbraten" und "Fertig garen").

Mögliche Parameter der Prioritätszahlberechnung können dabei sein:
- Temperatur des Garguts beziehungsweise dessen Abweichung vom Sollwert
- Temperatur des Garraums beziehungsweise Garhilfsmediums beziehungsweise deren Abweichung
- Bei Kombidämpfern: Feuchte beziehungsweise Abweichung vom Sollwert
- Restzeit des Garprozesses beziehungsweise Restzeit im Vergleich zur vom Anwender definierten Fertigstellungszeit (beispielsweise auf Basis von Temperaturen berechnete Prioritätszahl wird gewichtet, also multipliziert, mit zum Beispiel (t_Restzeit+T_Puffer) / T Zeit bis_Fertigstellungszeit.)
- Rezeptschritt-spezifische Faktoren, beispielsweise wenn Interaktionen vom Anwender gefordert sind oder unmittelbar nach dem Beladen des Garraums.

Die Erfindung wird nachfolgend anhand verschiedener Ausführungsformen beschrieben, die in den beigefügten Zeichnungen dargestellt sind. In diesen zeigen:
- Figur 1 ein System mit mehreren Geräten gemäß einer ersten Ausführungsform;
- Figur 2 ein System mit mehreren Geräten gemäß einer zweiten Ausführungsform;
- Figur 3 ein Diagramm mit Beispielen von möglichen Lastkurven;
- Figur 4 ein Diagramm mit einem beispielhaften Verlauf der maximalen Last im Tagesprofil;
- Figur 5 ein Diagramm des Energiebedarfs eines Gargeräts mit voller und halber Leistung; und
- Figur 6 in einem Diagramm ein Beispiel für nutzbare Lastkapazitäten.

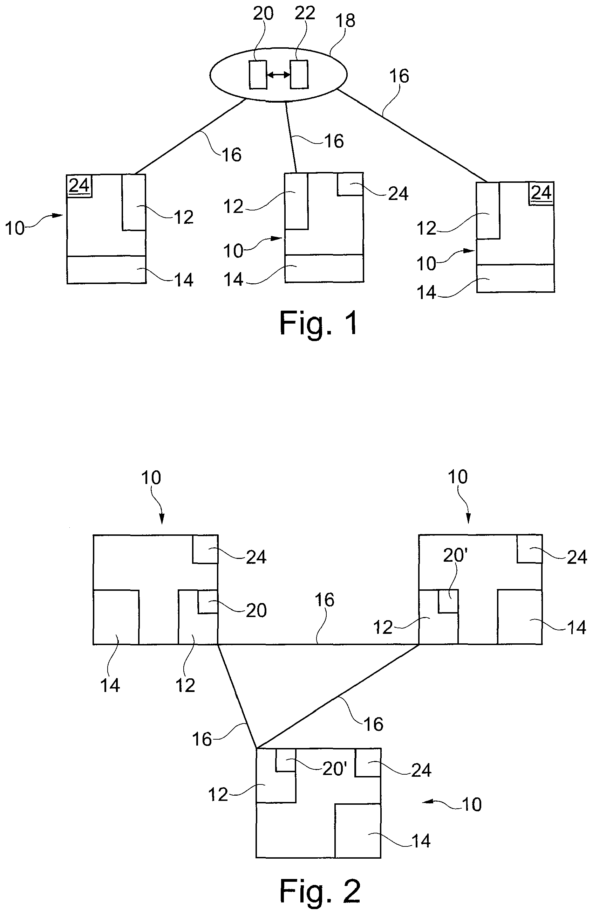

In Figur 1 sind drei elektrische Geräte 10 dargestellt, die jeweils eine Steuerung 12 und einen Verbraucher aufweisen.

Im nachfolgenden Ausführungsbeispiel werden zur Veranschaulichung elektrische Verbraucher verwendet.

Bei den elektrischen Verbrauchern 14 handelt es sich um Baugruppen, die einen solchen elektrischen Leistungsbedarf haben, dass er für den Anschlusswert des Geräts 10 maßgeblich ist. Bei den elektrischen Verbrauchern 14 handelt es sich beispielsweise um eine Heizvorrichtung, mit der Luft, Wasser, Öl, ein anderes Medium oder auch ein anderes Bauteil eines Geräts aufgeheizt werden kann. Beim elektrischen Verbraucher kann es sich auch um einen Elektromotor oder ein anderes elektrisches Bauteil handeln.

Die Geräte 10, genauer gesagt deren Steuerungen 12, stehen über eine Kommunikationsverbindung 16 mit einem stationären Master 18 in Verbindung, der hier als Cloud-basierte Serveranwendung implementiert ist.

Teil des Masters 18 ist ein Allokationsmodul 20, in welchem ein vorgegebener maximaler Leistungswert hinterlegt ist. Dieser vorgegebene maximale Leistungswert entspricht der gewünschten maximalen Leistungsaufnahme aller Geräte 10, die zum System gehören. Dieser Wert ist üblicherweise geringer als die aufaddierte Anschlussleistung aller Geräte 10 des Systems.

Das Allokationsmodul 20 kann auf eine Datenbank 22 zugreifen, in der Leistungsdaten und Leistungsprofile von unterschiedlichen Prozessen hinterlegt sind, die in den Geräten 10 ablaufen können. Es können auch Profile über typische elektrische Verbrauchswerte über den Tag hinterlegt sein.

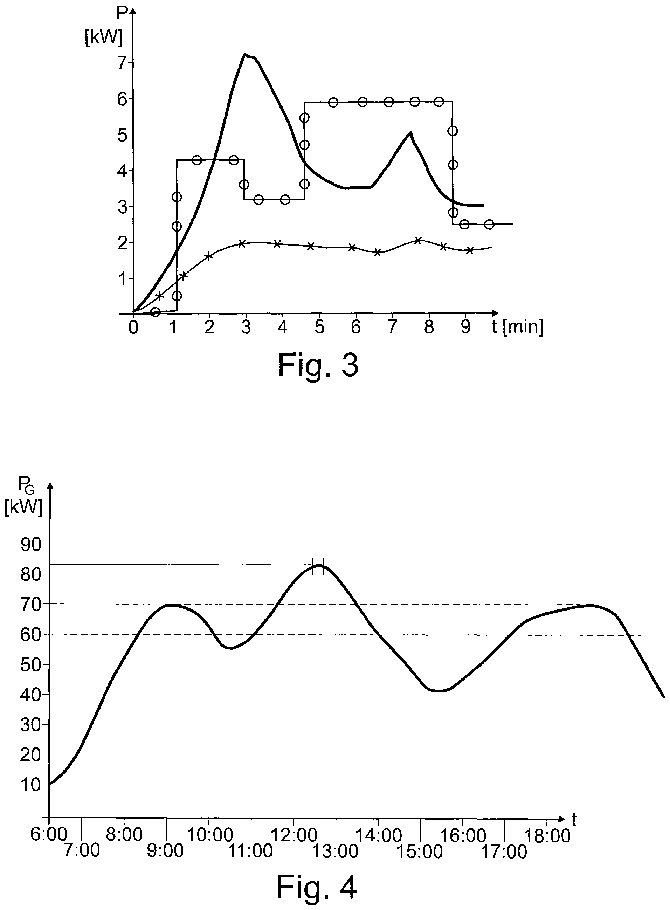

Beispiele für verschiedene Leistungsdaten und Leistungsprofile sind in Figur 3 gezeigt, in der beispielhaft für drei unterschiedliche Geräte die möglichen Lastkurven aufgetragen sind, nämlich in einer normalen, durchgehenden Linie ein erstes Gerät, in der mit Kreuzen gekennzeichneten Linie ein zweites Gerät und in der mit Kreisen gekennzeichneten Linie ein drittes Gerät.

Ein Beispiel für den elektrischen Verbrauch über den Tag ist in Figur 4 gezeigt. In diesem Beispiel beträgt der maximale elektrische Verbrauch etwas über 80 kW, wobei dieser Wert nur relativ kurzzeitig um 13:00 Uhr herum erreicht wird.

In Figur 4 sind gestrichelt auch zwei Beispiele für mögliche maximale Leistungswerte eingezeichnet, nämlich ein Leistungswert knapp oberhalb von 70 kW und ein zweiter bei 60 kW. Es ist zu sehen, dass dann, wenn das Allokationsmodul 20 eine maximale Leistungsaufnahme aller Geräte 10 von etwas über 70 kW zulässt, dies zu einer Einschränkung über einen Zeitraum von lediglich zwei Stunden am Tag führt. Im Gegenzug wird bei der Abrechnung des Stromverbrauchs mittels RLM-Verfahren nicht mehr mit dem Spitzenwert von über 90 kW gearbeitet, sondern mit etwas über 70 kW. Dies führt zu einer erheblichen Einsparung.

Wenn der maximale Leistungswert von beispielsweise 60 kW verwendet wird, ist zu sehen, dass dies den Betrieb der elektrischen Geräte 10 über drei Phasen "beeinträchtigt", nämlich vormittags gegen 09:00 Uhr, mittags im Bereich von 11:30 - 14:00 Uhr und abends zwischen 18:00 und 21:00 Uhr. Als "Gegenwert" zur verringerten maximalen Leistungsaufnahme der Geräte 10 ergeben sich geringere Stromkosten für den Betreiber der elektrischen Geräte.

Beim gezeigten Ausführungsbeispiel dient das Allokationsmodul 20 dazu, die maximale Leistungsaufnahme der Geräte 10 zu kontrollieren und gegebenenfalls zu begrenzen. Dies geschieht allgemein ausgedrückt dadurch, dass jedes Gerät 10, bevor es einen elektrischen Verbraucher 14 in Betrieb nimmt, beim Allokationsmodul 20 hierfür eine Freigabe einholt. Das Allokationsmodul 20 entscheidet aufgrund der Leistungsaufnahme der anderen Geräte, ob die Freigabe erteilt werden kann.

Das Allokationsmodul 20 trifft diese Entscheidung dabei nicht nur auf der Basis der aktuellen Leistungsaufnahme der anderen Verbraucher 14, sondern auch unter Berücksichtigung der Leistungsaufnahme, die sich aufgrund von aktuell laufenden Prozessen in der Zukunft ergibt. Die entsprechenden Werte können aus der Datenbank 22 bezogen werden.

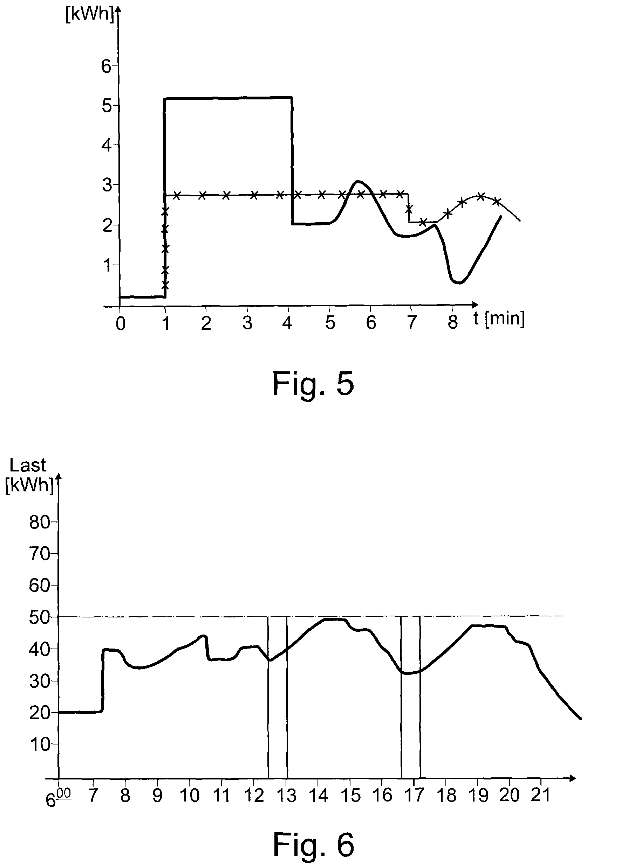

Ein Beispiel für die Leistungsaufnahme eines Gargeräts ist in Figur 5 gezeigt, wobei mit der durchgezogenen, normalen Linie die Leistungsaufnahme in einem normalen Garprogramm dargestellt ist und in der mit Kreuzen markierten Linie der Leistungsverlauf für dasselbe Garprogramm dargestellt ist, jedoch betrieben mit halber Leistung. Es ist zu sehen, dass sich beim Betrieb mit halber Leistung ein erster Garprozessabschnitt, der dem Aufheizen entspricht, verlängert, wobei jedoch insgesamt die maximale Leistungsaufnahme verringert ist.

Wenn es sich bei den Geräten 10 um Gargeräte handelt, prüft das Allokationsmodul 20 beispielsweise, ob der aktuell angefragte neue Prozess, beispielsweise "Schweinebraten", über die gesamte Gardauer zu einer Leistungsaufnahme führt, mit der der vorgegebene maximale Leistungswert überschritten wird. Es wird also eine Simulation der Leistungsaufnahme der Geräte entsprechend allen aktuell angefragten und ablaufenden Prozessen vorgenommen, um zu überprüfen, ob in der Zukunft der vorgegebene maximale Leistungswert überschritten wird.

Falls dies nicht der Fall ist, wird der neue Prozess freigegeben.

Falls der neue Prozess dazu führen würde, dass der vorgegebene maximale Leistungswert überschritten wird, kann das Allokationsmodul 20 auf verschiedene Weisen reagieren.

Im einfachsten Fall wird der neu angefragte Prozess nicht freigegeben, sondern muss warten, bis mindestens ein anderer Prozess abgeschlossen ist oder in eine Phase eingetreten ist, in der die Leistungsaufnahme verringert ist.

In einem anderen Szenario entscheidet das Allokationsmodul 20, dass entweder der neu angefragte Prozess in modifizierter Form freigegeben wird, beispielsweise mit verringerter Leistungsaufnahme, oder dass in einem bereits laufenden Prozess so eingegriffen wird, dass dort die Leistungsaufnahme verringert wird.

Es ist auch möglich, dass das Allokationsmodul 20 die bereits ablaufenden Prozesse in ihrer Reihenfolge oder in zukünftigen Prozessabschritten derart neu organisiert, dass der neu angefragte Prozess bereits jetzt freigegeben werden kann. Beispielsweise kann das Allokationsmodul entscheiden, den Kompressor eines Kühlraums vorzeitig einzuschalten, obwohl dies aufgrund des Temperaturverlaufs eigentlich erst wieder in einer Stunde notwendig ist, wenn dadurch die elektrische Leistung für den den Kompressor antreibenden Elektromotor in einen Zeitabschnitt "verschoben" werden kann, in welchem noch Lastkapazitäten vorhanden sind. Solche Lastkapazitäten sind in Figur 6 beispielhaft schraffiert in einem Diagramm dargestellt, das die gesamte Leistungsaufnahme über einen Tag darstellt.

In Figur 2 ist eine zweite Ausführungsform eines Systems mit mehreren Geräten 10 gezeigt. Der Unterschied zur ersten Ausführungsform besteht darin, dass das Allokationsmodul 20 hier in jeder der Steuerungen 12 implementiert werden kann. Im gezeigten Ausführungsbeispiel ist das Allokationsmodul in dem hier links oben gezeigten Gerät 10 implementiert, während die inaktiven Allokationsmodule 20' in den beiden anderen Geräten 10 bereitstehen, jederzeit die Funktion des aktiven Allokationsmoduls 20 zu übernehmen.

Das Allokationsmodul 20 geht von einem Gerät 10 auf ein anderes Gerät 10 beispielsweise dann über, wenn das Gerät 10 ausgeschaltet wird, welches aktuell das Allokationsmodul 20 implementiert. Ein anderes Ereignis, welches einen Wechsel des Allokationsmoduls 20 auslösen kann, ist beispielsweise, wenn in der Steuerung, die das Allokationsmodul 20 aktuell implementiert, ein besonders rechenintensiver Vorgang durchgeführt werden muss, aufgrund dessen es vorteilhaft erscheint, die bisher für die Implementierung des Allokationsmoduls 20 gebundene Rechenleistung "freizuschaufeln".

An jedem der Geräte 10 kann eine Anzeigevorrichtung 24 vorgesehen sein, mit der die üblichen Betriebsparameter angezeigt werden können und die auch als Bedienschnittstelle für einen Benutzer verwendet werden kann. Mittels der Anzeigevorrichtung 24 kann der Benutzer auch auf das Allokationsmodul 20 dahingehend einwirken oder zugreifen, dass die Priorisierung von bestimmten Prozessen beeinflusst wird. Beispielsweise kann, wenn es sich bei den Geräten 10 um Gargeräte handelt, ein Bediener einen bestimmten Garprozess als unbedingt zu bevorzugen markieren, wenn es für den weiteren Ablauf unabdingbar ist, dass die zu garenden Nahrungsmittel zu einem bestimmten Zeitpunkt fertig sind.

Soweit ein Bediener nicht manuell eingreift, kann das Allokationsmodul 20 aufgrund hinterlegter Merkmale entscheiden, welche Prozesse gegenüber anderen Prozessen zu priorisieren sind. Hierbei sind insbesondere die Auswirkungen in der Praxis entscheiden. Beispielsweise kann der Betrieb eines Kühlmittelkompressors, mit dem ein Kühlhaus gekühlt wird, nur innerhalb gewisser Grenzen nicht freigegeben werden. Falls die Temperatur im Kühlhaus über einen bestimmten Wert ansteigt, kann dies zu einem erheblichen finanziellen Schaden führen. Ein anderes Beispiel sind Lebensmittel, die unter sehr präzisen Bedingungen gegart werden müssen, damit das gewünschte Ergebnis erreicht wird. Beispielsweise ist zum Anbraten von Steak eine gewisse Temperatur unabdingbar. Hier muss das Allokationsmodul 20 gewährleisten, dass mindestens für einen vergleichsweise kurzen Zeitraum die zum Anbraten nötige Leistung zur Verfügung steht. Ein Beispiel für die umgekehrte Situation ist das Aufheizen einer Spülmaschine. Es ist für das Ergebnis des Spülprozesses nahezu ohne Auswirkung, mit welcher Leistung und damit mit welcher Geschwindigkeit die Spülflotte aufgeheizt wird.
Spülmaschine. Es ist für das Ergebnis des Spülprozesses nahezu ohne Auswirkung, mit welcher Leistung und damit mit welcher Geschwindigkeit die Spülflotte aufgeheizt wird.

## Patentansprüche

1. Verfahren zum Betreiben von mehreren Gargeräten (10), die jeweils mindestens einen elektrischen Verbraucher (14) enthalten, mit den folgenden Schritten:
- jedes Gerät (10) fragt, bevor es seinen Verbraucher (14) einschaltet, bei einem Allokationsmodul (20) an, ob ein Verbraucher (14) des Geräts (10) in Betrieb genommen werden kann,
- das Allokationsmodul (20) entscheidet auf der Basis von Parametern eines angefragten Prozesses des Geräts, von Parametern von aktuell laufenden und/oder geplanten Prozessen der Verbraucher (14) anderer Geräte (10) und eines vorgegebenen maximalen Leistungswerts, ob der angefragte Prozess freigegeben, modifiziert oder zumindest vorläufig gesperrt wird,
- wobei eine Kommunikationsverbindung zwischen der Steuerung der Geräte (10) und dem Allokationsmodul (20) vorhanden ist und wobei die Geräte (10) untereinander vernetzt sind, sodass anhand von verschiedenen, für den jeweiligen Anwendungszweck geeigneten Parametern abgestimmt wird, welcher Prozess Vorrang gegenüber anderen Prozessen hat beziehungsweise umgekehrt, welcher Prozess modifiziert oder zurückgestellt wird,
- **dadurch gekennzeichnet, dass** das Allokationsmodul (20) bei der Entscheidung auf eine Datenbank (22) zugreift, in der Leistungsdaten und Leistungsprofile für unterschiedliche Prozesse hinterlegt sind, wobei es sich bei den Leistungsdaten um den typischen Energieverbrauch der Verbraucher (14) über den Tagesablauf handelt.

2. Verfahren nach Anspruch 1, **dadurch gekennzeichnet, dass** die Parameter der aktuell laufenden und/oder geplanten Prozessen mindestens einen der folgenden Parameter umfassen: Rest-Garzeit, Leistungsbedarf beim Garen, Leistungsbedarf beim Auf- oder Vorheizen.

3. Verfahren nach einem der vorhergehenden Ansprüche, **dadurch gekennzeichnet, dass** eine modifizierte Freigabe darin besteht, den Prozess mit verringerter Leistung zu starten oder auszuführen.

4. Verfahren nach einem der vorhergehenden Ansprüche, **dadurch gekennzeichnet, dass** eine modifizierte Freigabe darin besteht, den Prozess erst zu starten, wenn sich die Leistungsaufnahme mindestens eines anderen Prozesses verringert hat.

5. Verfahren nach einem der vorhergehenden Ansprüche, **dadurch gekennzeichnet, dass** eine modifizierte Freigabe darin besteht, einen Prozess zumindest teilweise vorzuziehen.

6. Verfahren nach einem der vorhergehenden Ansprüche, **dadurch gekennzeichnet, dass** die Geräte (10) nach vorgegebenen Regeln eine Entscheidung treffen, wer das Allokationsmodul (20) implementiert.

7. Verfahren nach einem der vorhergehenden Ansprüche, **dadurch gekennzeichnet, dass** das Allokationsmodul (20) mindestens eine der folgenden Zuteilungsstrategien anwendet: "First in - first out", "Vorrang für kurze, leistungsintensive Prozesse", "Priorisierung nach nächstliegendem Abschlusszeitpunkt", "komplexe Priorisierung".

8. Verfahren nach Anspruch 8, **dadurch gekennzeichnet, dass** bei der Zuteilungsstrategie "komplexe Priorisierung", wenn ein beteiligtes Gerät (10) ein Gargerät ist, mindestens einer der folgenden Prioritätsgesichtspunkte berücksichtigt wird: Abweichung von der vom Benutzer erwarteten Garzeit, Auswirkung auf den Garzustand, Notwendigkeit einer Benutzerinteraktion.

9. System mit mehreren Geräten (10), die jeweils mindestens einen elektrischen Verbraucher (14) sowie eine Steuerung (12) aufweisen, und mit einem Allokationsmodul (20), in dem ein maximaler Leistungswert für die Verbraucher (14) hinterlegt ist, wobei eine Kommunikationsverbindung (16) zwischen den Steuerungen der Geräte (10) und dem Allokationsmodul (20) vorhanden ist, welche dazu eingerichtet ist, über die Steuerungen (12) Informationen über geplante und aktuelle Prozesse der Geräte an das Allokationsmodul (20) zu senden und vom Allokationsmodul (20) ein auf der Basis von Parametern eines angefragten Prozesses entschiedenes Freigabesignal zur Inbetriebnahme des Verbrauchers (14) an den Steuerungen zu empfangen, und wobei die Geräte (10) untereinander vernetzt sind, sodass anhand von verschiedenen, für den jeweiligen Anwendungszweck geeigneten Parametern abstimmbar ist, welcher Prozess Vorrang gegenüber anderen Prozessen hat beziehungsweise umgekehrt, welcher Prozess modifiziert oder zurückgestellt wird, **dadurch gekennzeichnet, dass** das System eine Datenbank (22) hat, in der Leistungsdaten und Leistungsprofile für unterschiedliche Prozesse hinterlegt sind, wobei es sich bei den Leistungsdaten um den typischen Energieverbrauch der Verbraucher (14) über den Tagesablauf handelt, und wobei das Allokationsmodul eingerichtet ist, bei der Entscheidung über ein Freigabesignal auf die Datenbank (22) zuzugreifen.

10. System nach Anspruch 9, **dadurch gekennzeichnet, dass** das Allokationsmodul (20) als stationärer Master implementiert ist.

11. System nach Anspruch 9 oder Anspruch 10, **dadurch gekennzeichnet, dass** das Allokationsmodul (20) eine Serveranwendung ist.

12. System nach Anspruch 11, **dadurch gekennzeichnet, dass** das Allokationsmodul (20) eine Cloud-basierte Serveranwendung ist.

13. System nach Anspruch 9, **dadurch gekennzeichnet, dass** das Allokationsmodul (20) als dynamischer Master implementiert ist.

14. System nach einem der Ansprüche 9 bis 13, **dadurch gekennzeichnet, dass** die Geräte (10) aus mindestens einer der folgenden Gerätegruppen stammen: Gargerät, insbesondere Kombidämpfer oder Tiegel-Gargerät, Fritteuse.

15. System nach einem der Ansprüche 9 bis 14, **dadurch gekennzeichnet, dass** eine Anzeigevorrichtung (24) vorgesehen ist, mit der einem Benutzer Informationen über eine verfügbare Leistung und/oder Vorschläge für einen geänderten Ablauf von Prozessen angezeigt werden können.

## Claims

1. Method of operating a plurality of cooking devices (10) which each contain at least one electrical consumer (14), comprising the following steps:
- before it switches on its consumer (14), each device (10) asks an allocation module (20) whether a consumer (14) of the device (10) can be put into operation,
- on the basis of parameters of a requested process of the device, of parameters of currently running and/or planned processes of the consumers (14) of other devices (10) and of a predefined maximum power value, the allocation module (20) decides whether the requested process is enabled, modified or at least temporarily disabled,
- wherein a communications link between the controller of the devices (10) and the allocation module (20) is provided and wherein the devices (10) are networked with each other so that, based on different parameters suitable for the respective intended purpose, it is coordinated which process takes precedence over other processes and, conversely, which process is modified or deferred,
- **characterized in that** when making the decision, the allocation module (20) accesses a database (22) in which power data and power profiles for different processes are stored, the power data being the typical energy consumption of the consumers (14) over the course of the day.

2. Method according to claim 1, **characterized in that** the parameters of the currently running and/or planned processes comprise at least one of the following parameters: remaining cooking time, power required during the cooking, power required during heating-up or preheating.

3. Method according to either of the preceding claims, **characterized in that** a modified enabling consists in starting or carrying out the process with reduced power.

4. Method according to any of the preceding claims, **characterized in that** a modified enabling consists in starting the process only after the power consumption of at least one other process has decreased.

5. Method according to any of the preceding claims, **characterized in that** a modified enabling consists in at least partially bringing forward a process.

6. Method according to any of the preceding claims, **characterized in that** the devices (10) make a decision according to predefined rules as to which one implements the allocation module (20).

7. Method according to any of the preceding claims, **characterized in that** the allocation module (20) applies at least one of the following allocation strategies: "first in - first out", "precedence for short, power-intensive processes", "prioritization according to closest completion time", "complex prioritization".

8. Method according to claim 8, **characterized in that** in the "complex prioritization" allocation strategy, if a device (10) involved is a cooking device, at least one of the following priority aspects is taken into account: deviation from the cooking time expected by the user, effect on the level of doneness, necessity of user interaction.

9. System comprising a plurality of devices (10) which each include at least one electrical consumer (14) and a controller (12), and comprising an allocation module (20) in which a maximum power value for the consumers (14) is stored, wherein a communications link (16) between the controllers of the devices (10) and the allocation module (20) is provided, which is configured to send information about planned and current processes of the devices to the allocation module (20) by means of the controllers (12) and to receive, at the controllers, from the allocation module (20) an enabling signal decided on the basis of parameters of a requested process, for putting the consumer (14) into operation, and wherein the devices (10) are networked with each other so that, based on different parameters suitable for the respective intended purpose, it can be coordinated which process takes precedence over other processes and, conversely, which process is modified or deferred, **characterized in that** the system has a database (22) in which power data and power profiles for different processes are stored, the power data being the typical energy consumption of the consumers (14) over the course of the day, and the allocation module being configured to access the database (22) when deciding on an enabling signal.

10. System according to claim 9, **characterized in that** the allocation module (20) is implemented as a stationary master.

11. System according to claim 9 or claim 10, **characterized in that** the allocation module (20) is a server application.

12. System according to claim 11, **characterized in that** the allocation module (20) is a cloud-based server application.

13. System according to claim 9, **characterized in that** the allocation module (20) is implemented as a dynamic master.

14. System according to any of claims 9 to 13, **characterized in that** the devices (10) come from at least one of the following device groups: cooking device, in particular combination steamer or pot-type cooking device, deep fat fryer.

15. System according to any of claims 9 to 14, **characterized in that** a display device (24) is provided, by means of which information about an available power and/or proposals for an altered sequence of processes can be displayed to a user.

## Revendications

1. Procédé pour le fonctionnement d'une pluralité d'appareils de cuisson (10) contenant chacun au moins un consommateur électrique (14), comprenant les étapes suivantes :
- chaque appareil (10) demande, avant de mettre en marche son consommateur (14), à un module d'allocation (20) si un consommateur (14) de l'appareil (10) peut être mis en oeuvre,
- le module d'allocation (20) décide, sur la base de paramètres d'un processus requis de l'appareil, de paramètres de processus actuellement en cours et/ou prévus des consommateurs (14) d'autres appareils (10), et d'une valeur de puissance maximale prédéterminée, si le processus requis est validé, modifié ou au moins provisoirement bloqué,
- une liaison de communication étant présente entre la commande des appareils (10) et le module d'allocation (20), et les appareils (10) étant mis en réseau les uns avec les autres, de sorte que sur la base de différents paramètres adaptés à l'application prévue respective, il est coordonné quel processus est prioritaire par rapport à d'autres processus ou vice-versa, quel processus est modifié ou différé,
- **caractérisé en ce que** le module d'allocation (20), lors de la décision, accède à une base de données (22) dans laquelle des données de puissance et des profils de puissance sont mis en mémoire pour différents processus, les données de puissance étant la consommation d'énergie typique des consommateurs (14) au cours de la journée.

2. Procédé selon la revendication 1, **caractérisé en ce que** les paramètres des processus actuellement en cours et/ou prévus comprennent au moins l'un des paramètres suivants : temps de cuisson restant, puissance requise lors de la cuisson, puissance requise lors du chauffage ou préchauffage.

3. Procédé selon l'une des revendications précédentes, **caractérisé en ce qu'**une validation modifiée consiste à lancer ou exécuter le processus avec une puissance réduite.

4. Procédé selon l'une des revendications précédentes, **caractérisé en ce qu'**une validation modifiée consiste à lancer le processus uniquement lorsque la consommation de puissance d'au moins un autre processus a diminué.

5. Procédé selon l'une des revendications précédentes, **caractérisé en ce qu'**une validation modifiée consiste à avancer au moins partiellement un processus.

6. Procédé selon l'une des revendications précédentes, **caractérisé en ce que** les appareils (10) décident selon des règles prédéterminées lequel implémente le module d'allocation (20).

7. Procédé selon l'une des revendications précédentes, **caractérisé en ce que** le module d'allocation (20) applique au moins l'une des stratégies d'allocation suivantes : « premier entré - premier sorti », « priorité pour des processus courts à forte consommation de puissance », « priorisation selon le temps de finalisation le plus proche », « priorisation complexe ».

8. Procédé selon la revendication 8, **caractérisé en ce que** dans le cas de la stratégie d'allocation « priorisation complexe », au moins l'un des aspects de priorité suivants est pris en compte lorsqu'un appareil (10) impliqué est un appareil de cuisson : écart par rapport au temps de cuisson attendu par l'utilisateur, effet sur l'état de cuisson, nécessité d'une interaction avec l'utilisateur.

9. Système comprenant une pluralité d'appareils (10) qui présentent chacun au moins un consommateur électrique (14) et une commande (12), et comprenant un module d'allocation (20) dans lequel une valeur de puissance maximale pour le consommateur (14) est mise en mémoire, une liaison de communication (16) étant présente entre les commandes des appareils (10) et le module d'allocation (20), laquelle est aménagée de manière à envoyer des informations concernant des processus prévus et actuels des appareils au module d'allocation (20) par l'intermédiaire des commandes (12) et à recevoir, au niveau des commandes, un signal de validation de mise en oeuvre du consommateur (14), lequel provient du module d'allocation (20) et est décidé sur la base de paramètres d'un processus requis, et les appareils (10) étant mis en réseau les uns avec les autres, de sorte que sur la base de différents paramètres adaptés à l'application prévue respective, il est possible de coordonner quel processus est prioritaire par rapport à d'autres processus ou vice-versa, quel processus est modifié ou différé, **caractérisé en ce que** le système présente une banque de données (22) dans laquelle des données de puissance et des profils de puissance sont mis en mémoire pour différents processus, les données de puissance étant la consommation d'énergie typique des consommateurs (14) au cours de la journée, et le module d'allocation étant aménagé de manière à accéder à la banque de données (22) lors de la décision concernant un signal de validation.

10. Système selon la revendication 9, **caractérisé en ce que** le module d'allocation (20) est implémenté sous forme de maître stationnaire.

11. Système selon la revendication 9 ou la revendication 10, **caractérisé en ce que** le module d'allocation (20) est une application serveur.

12. Système selon la revendication 11, **caractérisé en ce que** le module d'allocation (20) est une application serveur basée sur le cloud.

13. Système selon la revendication 9, **caractérisé en ce que** le module d'allocation (20) est implémenté sous forme de maître dynamique.

14. Système selon l'une des revendications 9 à 13, **caractérisé en ce que** les appareils (10) proviennent d'au moins l'un des groupes d'appareils suivants : appareil de cuisson, notamment four mixte ou appareil de cuisson à cuve, friteuse.

15. Système selon l'une des revendications 9 à 14, **caractérisé en ce qu'**il est prévu un dispositif d'affichage (24) au moyen duquel il est possible d'afficher à l'utilisateur des informations concernant la puissance disponible et/ou des propositions pour un déroulement modifié des processus.
